# EUROPÄISCHE PATENTSCHRIFT

(11) **EP 3 262 388 B1**
(45) Veröffentlichungstag und Bekanntmachung des Hinweises auf die Patenterteilung: **03.04.2019**
(21) Anmeldenummer: 16713278.6
(22) Anmeldetag: 22.02.2016
(51) Int. Cl.: G01K 1/02, G01K 1/14

(54) **MESSSYSTEM UND VERFAHREN ZUR ÜBERWACHUNG VON CONTAINERN**
MEASURING SYSTEM AND METHOD FOR MONITORING CONTAINERS
SYSTÈME DE MESURE ET PROCÉDÉ PERMETTANT DE CONTRÔLER DES CONTENEURS

(30) Priorität: 24.02.2015 AT 1022015
(43) Veröffentlichungstag der Anmeldung: 03.01.2018
(73) Patentinhaber: Radicos Technologies GmbH, 1070 Wien (AT)
(72) Erfinder: VOCKENHUBER, Peter, 3960 Sierre (CH)
(74) Vertreter: Keschmann, Marc
(86) Internationale Anmeldenummer: PCT/AT2016/000014
(87) Internationale Veröffentlichungsnummer: WO 2016/134390

(56) Entgegenhaltungen:
- DE-T2- 3 872 069
- KR-A- 20110 019 958

## Beschreibung

Die Erfindung betrifft ein Messsystem zur Überwachung einer Mehrzahl von Containern, insbesondere Schiffscontainern, umfassend ein Gerüst, zumindest einen Kabelkopfrechner, zumindest ein gespanntes Halteelement, sowie eine Mehrzahl von in einem Sensorkabel angeordneten Temperatursensoren, wobei jedem Container zumindest ein Temperatursensor des Sensorkabels zuordenbar ist, das Sensorkabel mit dem zumindest einem Kabelkopfrechner verbunden ist und der zumindest eine Kabelkopfrechner ausgebildet ist, um Messergebnisse von den Temperatursensoren zu erhalten und die Messergebnisse auszuwerten, wobei das Sensorkabel an dem zumindest einen gespannten Halteelement, insbesondere einem Seil, befestigt ist, wobei das zumindest eine Halteelement an zumindest einer Stelle an dem Gerüst befestigt ist.

Die Erfindung findet weiters Anwendung in einem Containerschiff mit einem Messsystem der oben genannten Art. Die Erfindung betrifft weiters ein Verfahren zur Überwachung einer Mehrzahl von Containern, insbesondere Schiffscontainern, wobei jedem Container zumindest ein in einem Sensorkabel angeordneter Temperatursensor zugeordnet wird, das Sensorkabel mit zumindest einem Kabelkopfrechner verbunden wird, und der zumindest eine Temperatursensor Messergebnisse an den zumindest einen Kabelkopfrechner sendet und anschließend der zumindest eine Kabelkopfrechner die Messergebnisse der Temperatursensoren auswertet, wobei das Sensorkabel an einem gespannten Halteelement, insbesondere einem Seil, befestigt wird.

DE 38 72 069 T2 offenbart ein Messsystem zur Überwachung der Temperatur einer Mehrzahl von gekühlten, übereinander gestapelten Containern, wobei im Schiff vor jedem Container Temperatursensoren angebracht sind.

KR 2011 0019958 A offenbart ein Temperaturüberwachungssystem für Flüssigerdgastanks, wobei ein Fiberoptikkabel mit mehreren Temperatursensoren an einer Wand des Tanks angebracht und mit einem zentralen Computer verbunden ist.

Bei der Lagerung von Containern, insbesondere Schiffscontainern z.B. auf einem Transportschiff, kann es innerhalb der einzelnen Container zu Bränden kommen, die aufgrund der Struktur der Container über übliche Brandmeldeanlagen wie z.B. Rauchgasmelder nicht bzw. erst verspätet detektiert werden können. Container sind relativ robust und luftdicht und schließen eventuell entstehende Rauchgase ein, sodass eine frühzeitige Entdeckung und Lokalisierung von Bränden aufgrund der Rauchgasentwicklung nicht möglich ist. Dadurch entstehen oftmals gravierende Schäden an den Containerinhalten und auch an den Schiffen selbst, wenn ein offenes Feuer ausbricht.

Es ist daher bereits vorgeschlagen worden, Temperatursensoren einzusetzen, um Container hinsichtlich auftretender Brände zu überwachen. Da Container während des Transportes bzw. während der Lagerung geschlossen sind, ist es vorteilhaft, die einzelnen Temperatursensoren außerhalb der Container anzuordnen. Die Temperatursensoren liefern ihre Messwerte an eine zentrale Steuereinheit, welche die Messergebnisse auswertet. Die Temperatursensoren können z.B. in einem Sensorkabel angeordnet sein, welches mit einem Kabelkopfrechner verbunden ist, der für die Auswertung der Messergebnisse zuständig ist. Dies stellt eine besonders einfache und kostengünstige Bereitstellung einer Vielzahl von Temperatursensoren dar.

Ein ungelöstes Problem stellt jedoch die geeignete Befestigung der Temperatursensoren so dar, dass jedem Container wenigstens ein Temperatursensor zugeordnet ist, der die Temperatur des jeweiligen Containers von außen misst. Es ist denkbar, die Temperatursensoren an einem Gerüst anzuordnen, womit jedoch der Nachteil verbunden ist, dass die Messwerte des Temperatursensoren von der Temperatur des Gerüsts beeinflusst werden anstatt lediglich die Temperatur der Container wiederzugeben.

Bei Containerschiffen werden die Container mittels geeigneter Portalkräne von oben in den Rumpf des Schiffes hinabgelassen, wobei die einzelnen Container aufeinandergestapelt werden, wobei eine Vielzahl von Containerstapeln nebeneinander angeordnet wird. Zur seitlichen Führung der Container beim Beladen des Containerschiffes sind diese mit sogenannten Zellenführungen ("Cellguides") ausgestattet. Die Zellenführungen dienen weiters dazu, die Container im beladenen Zustand des Schiffes an ihrer jeweiligen Position zu halten. Die Zellenführungen bilden ein Gerüst aus, an welchem die Temperatursensoren angeordnet werden können, wobei dies jedoch zu den erwähnten Nachteilen hinsichtlich der Beeinflussung der Temperaturmesswerte führt.

Im Zusammenhang mit der Befestigung der Temperatursensoren besteht eine weitere Herausforderung darin, die Sensoren möglichst von den Schwingungen bzw. Vibrationen freizuhalten, die vom Schwanken des Schiffes sowie dem Schiffsantrieb ausgehen.

Es ist daher eine Aufgabe der Erfindung, ein Messsystem bereitzustellen, das die oben genannten Nachteile überwindet. Insbesondere ist es eine Aufgabe der Erfindung, ein zuverlässiges und einfaches Messsystem zur Überwachung einer Mehrzahl von Container bereitzustellen, bei dem jeder Container von wenigstens einem Temperatursensor überwacht werden kann.

Zur Lösung dieser Aufgabe sieht die Erfindung bei einem Messsystem der eingangs genannten Art vor, dass das Sensorkabel an zumindest einem gespannten Halteelement, insbesondere einem Seil, befestigt ist, wobei das zumindest eine Halteelement an zumindest einer Stelle an dem Gerüst befestigt ist. Das Sensorkabel ist somit nicht direkt an dem Gerüst befestigt, sondern an einem gesonderten Halteelement, welches die Aufgabe hat, das Sensorkabel sowie die Temperatursensoren in einem von den Containern und dem Gerüst freigestellten Zustand zu halten. Auf diese Weise wird eine Aufhängung für die Temperatursensoren geschaffen, welche diese von Störfaktoren, wie insbesondere Vibrationen und unerwünschten Temperatureinflüssen, freihält und exakte Messergebnisse gewährleistet.

Für ein solches Haltemittel sind gespannte Halteelemente, wie z.B. Seile, bestens geeignet, weil sie Vibrationen und andere Störfaktoren aufnehmen und lediglich vermindert oder gar nicht an das daran befestigte Sensorkabel weitergeben. Insbesondere können die gespannten Halteelemente in einfacher Weise so angeordnet werden, dass sie in Abstand von den zu überwachenden Containern und dem Gerüst positioniert sind, wodurch die erwünschte Freistellung des daran befestigten Sensorkabels und der Temperatursensoren von den Containern gelingt.

Dadurch dass die Halteelemente in gespanntem Zustand gehalten werden, gelingt es, die Frequenz von Schwingungen des Halteelements zu erhöhen, wodurch die Amplitude der Schwingungen verringert wird.

Eine weitere Verbesserung kann bevorzugt dadurch erreicht werden, dass das zumindest eine Halteelement, insbesondere das gespannte Seil, zumindest an einer Stelle mithilfe eines Federelements gelagert ist, wodurch die erforderliche Spannkraft in einfacher Weise eingestellt und aufgebracht werden kann.

Bevorzugt ist vorgesehen, dass das zumindest eine Halteelement an mehr als einer Stelle oder ausschließlich mithilfe von Federelementen gelagert ist. Solche Federelemente dienen dazu, um einerseits ein Halteelement spannen und um andererseits Störfaktoren besser aufnehmen zu können und somit die im Sensorkabel angeordneten Temperatursensoren noch besser gegenüber den Störfaktoren abschirmen zu können.

Weiters ist bevorzugt vorgesehen, dass das zumindest eine Halteelement an zumindest einer Stelle an einem Abstandselement befestigt ist, wobei das Abstandselement bevorzugt am Gerüst befestigt ist und von diesem auskragt. Ein solches Abstandselement sorgt für einen gewissen definierten Abstand zwischen dem Halteelement (und somit auch dem daran befestigten Sensorkabel) und den einzelnen Containern. Es ist bei den meisten Ausführungen nicht sinnvoll, wenn die Halteelemente direkt mit den Containern in Kontakt treten. Nachteilig hierbei ist z.B. die Übertragung von Vibrationen von den Containern auf das Sensorkabel, die durch die Nähe zu den Containern zu physikalischen Einwirkungen auf das Sensorkabel und insbesondere auf die Temperatursensoren führen können, welche die Funktionstüchtigkeit des Sensorkabels und somit des Messsystems beeinträchtigen können. Bevorzugt ist es daher, wenn das zumindest eine Halteelement an mehr als einer Stelle oder ausschließlich an Abstandselementen ausgebildet ist. Ein solches Abstandselement ist bevorzugt eine im wesentlichen dreieckige Platte, es kann aber im Rahmen der Erfindung auch eine andere Form haben.

Die Abstandselemente sind bevorzugt so angebracht, dass das Maß der Auskragung verstellbar ist, wobei dies beispielsweise durch eine schwenkbare Befestigung um eine Achse bewerkstelligt werden kann. Dies hat den Vorteil, dass der Abstand der Halteelemente und somit des Sensorkabels und der Temperatursensoren zu den Containern in einfacher Weise variiert werden kann, ohne die Halteelemente oder die Abstandselemente aufwendig umbauen zu müssen.

Eine weitere Verbesserung des erfindungsgemäßen Messsystems sieht vor, dass zumindest ein Halteelement ein Dämpfungselement aufweist. Ein solches Dämpfungselement kann beispielsweise ausgebildet sein, um einen Abschnitt des gespannten Haltelements, insbesondere des Seils, aufzunehmen und eine Rückstellkraft auszuüben, wenn die Spannung des Haltelements z.B. auf Grund einer Auslenkung desselben erhöht wird. Auslenkungen und Schwingungen des gespannten Halteelements werden dadurch wirksam gedämpft. Entlang eines Halteelements können bevorzugt mehrere Dämpfungselemente angeordnet sein, z.B. zwei, drei, vier oder fünf Dämpfungselemente.

In einer bevorzugten Ausführung ist vorgesehen, dass zumindest eines, bevorzugt alle, der Halteelemente ein Stahlseil ist/sind. Stahlseile eignen sich für den Einsatz als erfindungsgemäße Halteelemente aus mehreren Gründen. Stahlseile sind einerseits sehr belastbar und andererseits günstig in der Herstellung und Anschaffung.

Weiters ist bevorzugt vorgesehen, dass das Sensorkabel lösbar an den Halteelementen angebracht ist. Dadurch ist eine einfache Montage sowie Demontage des Sensorkabels möglich.

Um gute Messergebnisse zu erzielen, ist bevorzugt vorgesehen, dass die Temperatursensoren von der Außenwand der einzelnen Container im im Wesentlichen gleichen Abstand angeordnet sind, bevorzugt in einer Distanz von 5 bis 50cm, besonders bevorzugt in einer Distanz von 10 bis 20cm. Dadurch, dass die Temperatursensoren jeweils im Wesentlichen den gleichen Abstand zu den jeweiligen Containern haben, sind Vergleiche zwischen den Messergebnissen der einzelnen Temperatursensoren möglich. Dies erhöht die Einsetzbarkeit und die Effizienz des Messsystems.

In einer bevorzugten Ausführung ist vorgesehen, dass die Halteelemente lösbar an dem Gerüst, insbesondere an einem Laufweg, befestigt sind. Dies ist z.B. wichtig, um bestehende Gerüste mit einem erfindungsgemäßen Messsystem nachzurüsten. Weiters ist es durch solch eine Ausbildung wesentlich einfacher, das Messsystem zu entfernen, z.B. für Reparatur- oder Instandhaltungsarbeiten. Besonders bevorzugt ist die Befestigung der Halteelemente mit zerstörungsfreien Befestigungsmethoden, wie z.B. Clips. Diese haben gegenüber z.B. Schraubverbindungen den Vorteil, dass einerseits ein geringerer Montageaufwand nötig ist und andererseits das Gerüst nicht durch Befestigungslöcher beschädigt wird.

Es ist bevorzugt vorgesehen, dass die Halteelemente im Wesentlichen jeweils vertikal angeordnet sind.

Weiters ist bevorzugt, dass das Sensorkabel im Wesentlichen horizontal mäanderförmig an den Halteelementen angeordnet ist. Dies stellt eine effiziente Art der Sensorkabelanordnung dar, die es erlaubt, einerseits jedem Container einen Temperatursensor zuzuordnen und andererseits eine übersichtliche und kurze Sensorkabelführung bereitzustellen.

Die Temperatursensoren können grundsätzlich jede Art von Temperatursensoren sein. Bevorzugt sind die Temperatursensoren als Infrarotsensoren ausgebildet. Um auch geringe Temperaturanstiege detektieren zu können, weisen die verwendeten Temperatursensoren eine hohe Temperaturauflösung von mindestens 0,05°C, bevorzugt mindestens 0,025°C auf. Geeignete Sensoren, die sowohl Infrarotstrahlung als auch die Temperatur der umgebenden Atmosphäre erfassen sind als Standardbausteine verfügbar.

Das Sensorkabel selbst besteht bevorzugt aus zwei Schichten aus Polyurethan und einer inneren Schutzschicht aus Polyethylen, welches die darin angeordneten Signalkabel schützt.

Die Temperatursensoren sind besonders bevorzugt in adressierbaren Knoteneinheiten des Sensorkabels untergebracht.

Ein erfindungsgemäßes Messsystem kann auch eingesetzt werden, um die Temperatur in den Containern zu kontrollieren, z.B. wenn temperatursensible Waren transportiert werden. Mithilfe des Messsystems kann dokumentiert werden, dass sich die Temperaturen innerhalb eines Containers während eines spezifischen Zeitraumes innerhalb der gemessenen Maximal- und Minimalwerte bewegt haben. Insbesondere ist es möglich, die Überschreitung bzw. Einhaltung geeigneter Temperaturgrenzen in Form eines Zertifikats auszugeben, das gegebenenfalls nach Beendigung des Transports ausgedruckt werden kann.

Gemäß einem weiteren Aspekt betrifft die Erfindung ein Containerschiff, umfassend ein erfindungsgemäßes Messsystem.

Bevorzugt ist bei einem Containerschiff vorgesehen, dass die Halteelemente und das Sensorkabel in einem Container-Laderaum und der mit dem Sensorkabel verbundene Kabelkopfrechner außerhalb des Container-Laderaums angeordnet sind. Hierbei ist es besonders bevorzugt, dass der Kabelkopfrechner in einem zentralen Steuerungsraum angeordnet ist. Dadurch wird es möglich, die Temperaturüberwachung einfach und komfortabel zu gestalten, weil diese zentral durchgeführt werden kann. Weiters ist auch ein mehrstufiger Aufbau möglich, sodass die Auswertung im Kabelkopfrechner erfolgt, aber die Anzeige in einem weiteren Gerät, welches z.B. mit mehreren Kabelkopfrechnern verbunden ist und alle Messergebnisse von diesen erhält.

Gemäß einem weiteren Aspekt betrifft die Erfindung ein Verfahren der eingangs genannten Art, wobei vorgesehen ist, dass das Sensorkabel an einem gespannten Halteelement, insbesondere einem Seil, befestigt wird.

Bevorzugt ist vorgesehen, dass die Temperatursensoren im Wesentlichen die von den ihnen zugeordneten Containern abgegebene Infrarot-Strahlung messen.

Bevorzugt ist vorgesehen, dass die Temperatursensoren zwischen zwei Halteelementen angeordnet werden und mit der Schiffsstruktur thermisch nicht in Kontakt stehen. Dadurch kann sichergestellt werden, dass die Temperatursensoren nicht durch äußere Störfaktoren beeinflusst werden, sondern lediglich die Temperaturentwicklung der zugeordneten Container messen.

Bei einer besonders einfachen Art der Auswertung der durch die Temperatursensoren gemessenen Werte ist vorgesehen, dass die Messwerte jeweils eines Temperatursensors mit einem festen Schwellenwert verglichen werden, wobei bei Überschreitung des Schwellenwertes ein Alarmsignal ausgelöst wird. Hierbei kann entweder für jeden Temperatursensor ein eigener Schwellenwert vorgesehen sein oder auch ein eigener Schwellenwert für eine Gruppe von Temperatursensoren oder ein einziger Schwellenwert für alle Temperatursensoren.

Eine variablere Art der Auswertung sieht vor, dass die Messwerte jeweils eines Temperatursensors mit einem Mittelwert aller Temperatursensoren verglichen werden, wobei bei Abweichungen der Messwerte des Temperatursensors von dem Mittelwert ein Alarmsignal ausgelöst wird. Es wird also basierend auf den Messwerten aller Temperatursensoren ein Mittelwert gebildet und die jeweiligen Messergebnisse mit diesem Mittelwert verglichen. Dadurch kann unterschiedlichen Temperaturniveaus, z.B. Tag- und Nachttemperaturen, auf einfache Art und Weise Rechnung getragen werden. Es ist auch möglich, einzelne Gruppen von Temperatursensoren zusammenzufassen und innerhalb dieser Gruppen einen Mittelwert zu bilden.

Bei der Auswertung der Messergebnisse kann bevorzugt vorgesehen sein, dass die Messwerte jeweils eines Temperatursensors mit den Messwerten der angrenzenden Temperatursensoren verglichen werden, wobei bei Abweichungen der Messwerte des Temperatursensors von den Messwerten der angrenzenden Temperatursensoren ein Alarmsignal ausgelöst wird. Diese Art der Auswertung hat den wesentlichen Vorteil, dass Zonen mit unterschiedlicher Temperaturverteilung berücksichtigt werden. Z.B. kann es innerhalb eines Laderaumes wärmere und kältere Bereiche geben, sodass eine für alle Temperatursensoren gleiche Auswertung nicht zielführend ist, um einen Brand zu detektieren.

Im Rahmen der oben beschriebenen Auswertungen ist es möglich, dass bereits eine einzige gemessene Abweichung bzw. Überschreitung ein Alarmsignal auslöst oder dass eine Mehrzahl von Abweichungen bzw. Überschreitungen erforderlich ist, um ein Alarmsignal auszulösen. Dieses Verfahren ist besonders gut geeignet, um dem Auftreten von einmaligen, nicht relevanten Messwertausreißern wirksam zu begegnen und Fehlalarme zu vermeiden. Erst wenn ein Schwellenwert mehrmals überschritten wird, wird eine Auffälligkeit festgestellt und ein Warnsignal ausgegeben.

Die Auswertung der Messwerte der Temperatursensoren kann bei den oben genannten Auswertungsalgorithmen auch so erfolgen, dass die Geschwindigkeit des Anstiegs der gemessenen Temperatur der Auswertung zugrunde gelegt wird und die Anstiegsgeschwindigkeit mit Grenzwerten oder anderen Referenzwerten, wie z.B. dem oben dargestellten Mittelwert verglichen wird.

Eine besonders bevorzugte Auswertemethode besteht darin, die Temperaturen der benachbarten Container der Analyse zugrundezulegen. Wenn etwa ein Container eine höhere Temperatur (oder einen höheren Temperaturanstieg) aufweist, als seine Nachbarn, kann auf eine thermische Anomalie geschlossen werden. Diese Methode ist sehr effizient, da derart erfasst wird, ob sich eine Wärmequelle innerhalb des Laderaums befindet. Im Normalfall werden sich die Temperaturen der einzelnen Sensoren ändern, doch diese Änderung wird immer vom Rand des erfassten Temperaturfeldes ausgehen. Die Auswertung wird daher bevorzugt so vorgenommen, dass Temperaturdifferenzen zwischen benachbarten Containern erfasst werden und dass Temperaturdifferenzen, die zwischen randseitig angeordneten, d.h. der Umgebung zugewandten Containern und benachbarten, weiter innen angeordneten Containern festgestellt werden und sich nach innen fortpflanzen, als Normalfall erkannt werden, und Temperaturdifferenzen, die sich von innen nach außen fortpflanzen als Alarmfall erkannt werden.

Wenn diese Methode der Analyse zugrundegelegt wird, ist es natürlich vorteilhaft, auch die Temperatur außerhalb des Container-Stapels zu messen, da die sich am Rande des Laderaums befindlichen Container sonst nicht in die Analyse einbezogen werden können. Diese Außentemperatur stellt naturgemäß in allen ungestörten Fällen entweder eine Wärmequelle oder eine Wärmesenke dar, und weist daher entweder den höchsten oder den tiefsten Wert auf.

Zweckmäßig kann dafür zum Beispiel die Temperatur der Wände des Laderaums verwendet werden, die an einigen Stellen mitgemessen wird.

Bei der Auswertung ist weiters bevorzugt vorgesehen, dass das Alarmsignal die räumliche Position des Temperatursensors bzw. des diesem Temperatursensor zugeordneten Containers angibt. Hierdurch kann schnell festgestellt werden, welche(r) Container betroffen sind und Gegenmaßnahmen können unverzüglich eingeleitet werden. Insbesondere kann der Kabelkopfrechner elektronische Mittel zur Erzeugung einer graphischen Benutzeroberfläche aufweisen oder mit solchen Mitteln verbunden sein, um Status- und ggf. Alarmsignale auf einer Anzeigeeinheit, wie z.B. einem Bildschirm anzuzeigen.

Gemeinsames Merkmal aller erfindungsgemäßen Auswertemethoden ist daher die Erfassung einer Mehrzahl von Temperatursensorwerten und deren zentrale Auswertung in einem Kabelkopfrechner, dem die Gesamtheit aller Sensorwerte vorliegt.

Bevorzugt sind die einzelnen Temperatursensoren im Sensorkabel in adressierbaren Knoteneinheiten integriert. Diese Knoteneinheiten umfassen neben den Temperatursensoren elektronische Schaltungen, z.B. zur Auswertung und Zwischenspeicherung von Messwerten, oder Stromspeicher.

Eine ergänzende Auswertung kann auch lokal, d.h. in den einzelnen Knoteneinheiten vorgenommen werden. Die lokale Auswertung kann verschiedene statistische Auswertungen umfassen, wie z.B. eine Mittelwert- oder Medianwertbildung, eine Aufsummierung oder eine Messwertanalyse. Die Ergebnisse der lokalen Auswertung können als "Messergebnis" an den Kabelkopfrechner übermittelt werden.

Um die lokale Auswertung der Messergebnisse zu ermöglichen, ist bevorzugt vorgesehen, dass die Knoteneinheit weiters einen Zwischenspeicher umfasst, wobei die Messergebnisse in diesem Zwischenspeicher zwischengespeichert werden. Der Zwischenspeicher kann entweder als analoges Element (z.B. als Kondensator) oder als digitales Element (etwa als Zähler) ausgeführt sein. Dem Zwischenspeicher werden die kontinuierlich oder in periodischen Abständen erfassten Messergebnisse zugeführt, wobei eine zugeordnete Auswerteschaltung eine lokale Auswertung der zwischengespeicherten Messergebnisse vornimmt. Sobald die Knoteneinheit vom Kabelkopfrechner adressiert wird, kann das Ergebnis der lokalen Auswertung dann an den Kabelkopfrechner übermittelt werden, wodurch die zu übermittelnde Datenmenge wesentlich geringer ist als wenn alle zwischengespeicherten Messergebnisse zu übermitteln wären. Nach der Übermittlung wird der Zwischenspeicher bevorzugt zurückgesetzt, sodass dieser während des Zeitraums bis zur nächsten Adressierung wieder mit den kontinuierlich oder in periodischen Zeitabständen erfassten Messergebnissen gefüllt und die beschriebene Art der lokalen Auswertung vorgenommen wird.

Dabei weist der Zwischenspeicher bevorzugt einen RücksetzEingang auf, um den Zwischenspeicher zurückzusetzen. Das Rücksetzen des Zwischenspeichers bewirkt dabei insbesondere ein Löschen der darin gespeicherten Messergebnisse, worauf der Zwischenspeicher erneut gefüllt werden kann. Das Rücksetzen des Zwischenspeichers kann bevorzugt jedes Mal erfolgen, nachdem die Knoteneinheit adressiert wurde und die zwischengespeicherten Messergebnisse oder das Ergebnis einer auf den zwischengespeicherten Messergebnissen basierenden lokalen Auswertung an den Kabelkopfrechner übermittelt wurde.

Die zwischengespeicherten Messergebnisse können auch in einen weiteren lokalen Speicher übernommen werden, der sich in der Knoteneinheit befindet, und in dem daher eine Zeitreihe von Messergebnissen aus dem Zwischenspeicher verfügbar ist. Aus dieser Zeitreihe kann dann auf die Temperaturentwicklung der dem Temperatursensor zugeordneten Container geschlossen werden.

Zusätzlich kann vorgesehen sein, dass der Kabelkopfrechner mit den Knoteneinheiten zusammenwirkt, um Status- und/oder Warnsignale an die betroffene Knoteneinheit zu übermitteln, sodass ein entsprechendes visuelles oder akustisches Signal an der Knoteneinheit ausgegeben wird. Besonders einfach können Statussignale in der Knoteneinheit über LEDs ausgegeben werden, z.B. eine grüne LED leuchtet, wenn die Temperatur im Normalbereich liegt, und eine rote LED leuchtet, wenn die Temperatur nicht im Normalbereich liegt.

Bevorzugt ist vorgesehen, dass der zumindest eine Kabelkopfrechner eine Anfrage an zumindest eine Knoteneinheit sendet, um die Übermittlung eines Messergebnisses auszulösen. Die Knoteneinheiten sind somit einzeln adressierbar, wobei bevorzugt vorgesehen ist, dass die Knoteneinheiten in ihrer Reihenfolge entlang des Sensorkabels nacheinander adressiert werden. Insbesondere können die Knoteneinheiten zyklisch adressiert werden, wobei nach einem Durchlauf aller Knoteneinheiten wieder bei der ersten Knoteneinheit begonnen wird. Der Zeitabstand zwischen den einzelnen Zyklen kann hierbei frei gewählt werden, wobei die Genauigkeit der Messwertauswertung hinsichtlich einer Trenderkennung umso höher ist, je kürzer der zeitliche Abstand zwischen den Zyklen gewählt ist.

Bevorzugt wird den einzelnen Knoteneinheiten jeweils eine eindeutige Kennung zugeordnet, sodass die von ein und derselben Knoteneinheit erhaltenen Messergebnisse im Kabelkopfrechner einander zugeordnet und einer gemeinsamen Auswertung zugeführt werden können.

Das Sensorkabel ist bevorzugt so ausgebildet, dass es wenigstens zwei elektrische Leiter aufweist, welche die entlang des Sensorkabels angeordneten Knoteneinheiten miteinander verbinden. Insbesondere ist die Knoteneinheit seriell in wenigstens einen der wenigstens zwei elektrischen Leiter eingefügt. Dies bedeutet, dass der wenigstens eine elektrische Leiter durch die Knoteneinheit unterbrochen ist, wobei die durch die Unterbrechung erzeugten zwei freien Enden des Leiters an die Knoteneinheit angeschlossen sind. Der elektrische Anschluss kann hierbei entweder lösbar ausgebildet sein, z.B. mittels einer Steckverbindung, oder unlösbar, z.B. mittels einer Lötverbindung oder Schneidklemm-Verbindung (crimpen), sodass diese Verbindungen nicht zerstörungsfrei getrennt werden können.

Das Sensorkabel mit den integrierten Knoteneinheiten kann somit bevorzugt eine daisy chain ausbilden, bei der jede Knoteneinheit jeweils nur mit den vorangehenden Knoteneinheiten verbunden ist. Das Signal zu und von einer Knoteneinheit geht über seine Vorgänger bis zum Kabelkopfrechner hin.

Das Sensorkabel bildet zwischen zwei benachbarten Knoteneinheiten bevorzugt jeweils einen Verbindungsabschnitt aus. Die Verbindungsabschnitte können dabei untereinander die gleiche Länge aufweisen, sodass die Knoteneinheiten in regelmäßigen Abständen angeordnet sind. Bevorzugt weist das Sensorkabel eine Ummantelung auf, die sich sowohl über die Verbindungsabschnitte als auch über die Knoteneinheiten erstreckt. Die Ummantelung ist bevorzugt durch Extrudieren auf das Kabel aufgebracht, wodurch sich eine durchgehend einheitliche Oberfläche ergibt und die Knoteneinheiten samt den Temperatursensoren vollständig geschützt im Inneren der durchgehenden Ummantelung angeordnet sind.

Da das Extrudieren der Ummantelung im Bereich der Knoteneinheiten zu einer nicht unwesentlichen thermischen Belastung führt, sieht eine alternative Ausführung vor, dass das Sensorkabel eine Ummantelung aufweist, die sich über die Verbindungsabschnitte erstreckt und im Bereich der Knoteneinheiten unterbrochen ist. Im Bereich der Unterbrechung ist in diesem Fall eine gesonderte Verkapselung der Knoteneinheiten vorgesehen. Eine bevorzugte Ausbildung sieht in diesem Zusammenhang vor, dass der Bereich, in welchem die Ummantelung unterbrochen ist, von einem die jeweilige Knoteneinheit umgebenden Gehäuse überbrückt ist. Das Gehäuse kann dabei von einem durch Umgießen der Knoteneinheit entstandenen Gusskörper gebildet sein, wobei mit Vorteil auch die der Knoteneinheit zugewandten Enden der Verbindungsabschnitte des Sensorkabels umgossen werden, wodurch das Gehäuse mit der Ummantelung des Kabels verbunden wird.

Alternativ kann die Ausbildung so getroffen sein, dass das Gehäuse die Knoteneinheit rohrförmig umschließt und an beiden Enden staub- und wasserdicht an der angrenzenden Ummantelung befestigt ist. Die Befestigung ist vorzugsweise durch eine Crimpverbindung hergestellt, sodass eine kostengünstige und einfache Herstellung ermöglicht wird.

In einer weiteren, bevorzugten Ausführungsform sind die elektrischen Leiter bzw. Adern des Sensorkabels verdrillt ausgeführt, was im elektromagnetisch gestörten Umfeld vorteilhaft ist. Alternativ oder zusätzlich kann die Ummantelung des Sensorkabels zur Schirmung eine abschirmende Schicht aufweisen.

Bei einer Ausbildung, bei welcher die Ummantelung des Sensorkabels im Bereich der Knoteneinheiten unterbrochen ist, ist bevorzugt vorgesehen, dass das Gehäuse aus elektrisch leitendem Material, zum Beispiel Metall, vorzugsweise Aluminium ausgebildet und elektrisch leitend mit dem Schirm, d.h. der abschirmenden Schicht, des Sensorkabels verbunden ist. Dadurch wird erreicht, dass das Gehäuse den Schirm der beiden angrenzenden Verbindungsabschnitte des Sensorkabels verbindet. Besonders vorteilhaft ist hier, dass der Einfluss von externen elektromagnetischen Störungen durch die Kombination von Schirm und Gehäuse von der Knotenelektronik, die sich unter dem Gehäuse befindet, ferngehalten wird.

Weiters ist bevorzugt vorgesehen, dass die adressierbare Knoteneinheit von außerhalb des Signalkabels, also insbesondere mithilfe von drahtlosen Kommunikationsmitteln Signale empfangen bzw. nach außerhalb senden kann. Insbesondere kann drahtlose Kommunikation nach außen vorteilhaft durch die Modulation einer Leuchtdiode erfolgen, wobei beispielsweise am Ort eines auffälligen Containers eine entsprechende optische Anzeige direkt erfolgen oder angesteuert werden kann. Es ist daher bevorzugt vorgesehen, dass jeder Knoteneinheit eine Leuchtdiode zugeordnet ist, die bevorzugt in oder an der jeweiligen Knoteneinheit angeordnet ist.

Eine solche adressierbare Knoteneinheit weist bevorzugt Anschlüsse für wenigstens zwei elektrische Leiter auf, über welche die Knoteneinheit adressierbar ist, welche Anschlüsse mit einer ein Adressiersignal auswertenden Schaltung der Knoteneinheit verbunden sind, wobei die Knoteneinheit mindestens eine Stromquelle aufweist, die über mindestens einen der Leiter mit Strom versorgbar ist, und dass am Wege zwischen der auswertenden Schaltung und dem entsprechenden Leitungsanschluss ein Schalter vorgesehen ist, der nach einer Adressierung zu öffnen ist, so dass die Stromversorgung der auswertenden Schaltung nach der Adressierung durch die mindestens eine Stromquelle gesichert ist. Dadurch ist insbesondere sichergestellt, dass die auswertende Schaltung auch im Ruhezustand ausreichend mit Strom versorgt ist.

Bevorzugt ist vorgesehen, dass der auswertenden Schaltung zwei zwischen den jeweiligen Leitern und dem besagten Schalter gelegene weitere Schalter zugeordnet sind, so dass ein Signalfluss in dem Leiter in zwei Richtungen ermöglicht ist, und dass vorzugsweise jeder dieser weiteren Schalter von einer in der Gegenrichtung des Signalflusses sperrende und somit der anderen entgegen gerichtete Diodenschaltung überbrückt ist.

Weiters ist bevorzugt, dass die Stromquelle als Stromspeicher ausgebildet ist und mindestens eine Kapazität, vorzugsweise mindestens einen Kondensator, aufweist.

Bei der Knoteneinheit ist bevorzugt vorgesehen, dass der Schalter am Wege zwischen der auswertenden Schaltung und dem entsprechenden Leitungsanschluss ein Transistorschalter ist, vorzugsweise ein MOS-Transistor.

In einer bevorzugten Ausbildung der Knoteneinheit ist vorgesehen, dass sie mit zwei Signalfühlern für Signale aus zwei unterschiedlichen Richtungen ausgebildet ist, und dass vorzugsweise die auswertende Schaltung mit mindestens einem Steuerausgang zum Umschalten der Richtung von Senden und Empfang ausgebildet ist und/oder dass sie zur Abgabe von Signalen in beide Richtungen mit einem Transistor mit je einer Kollektorleitung für je eine der Richtungen versehen ist.

Eine bevorzugte Knoteneinheit weist mindestens einen, vorzugsweise zwei, Signalfühler auf, der - unabhängig von dem besagten Schalter - ständig mit den Leitungen verbunden ist.

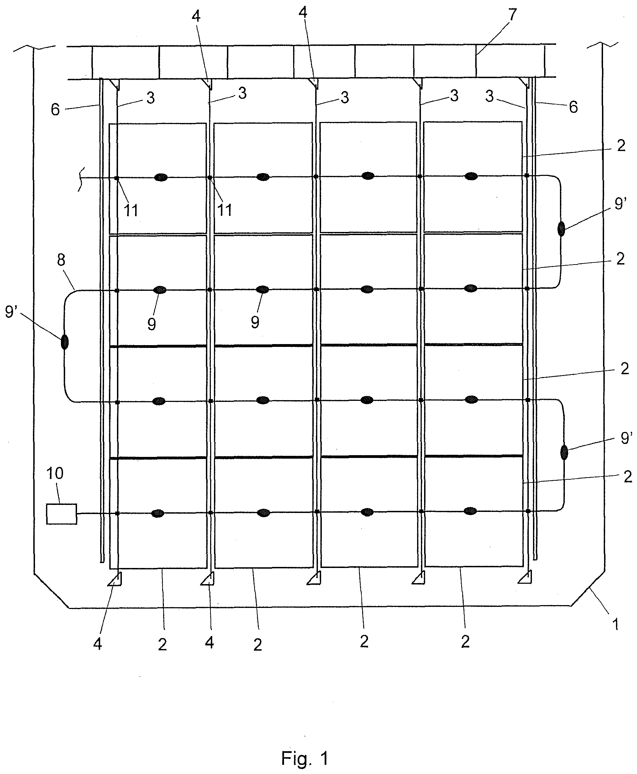

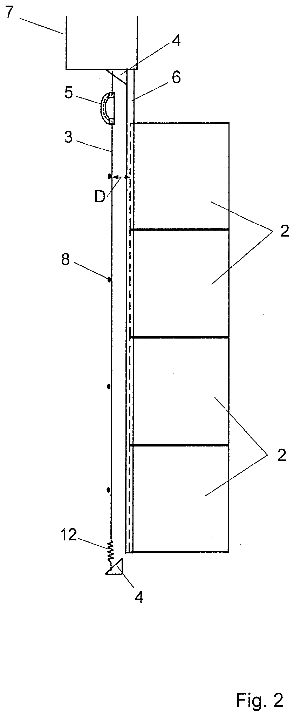

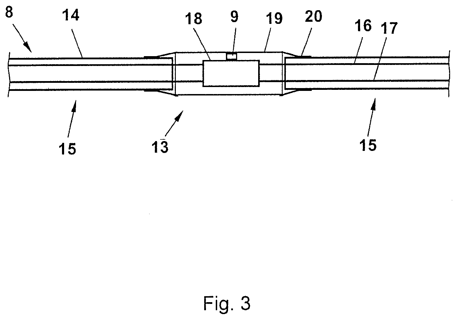

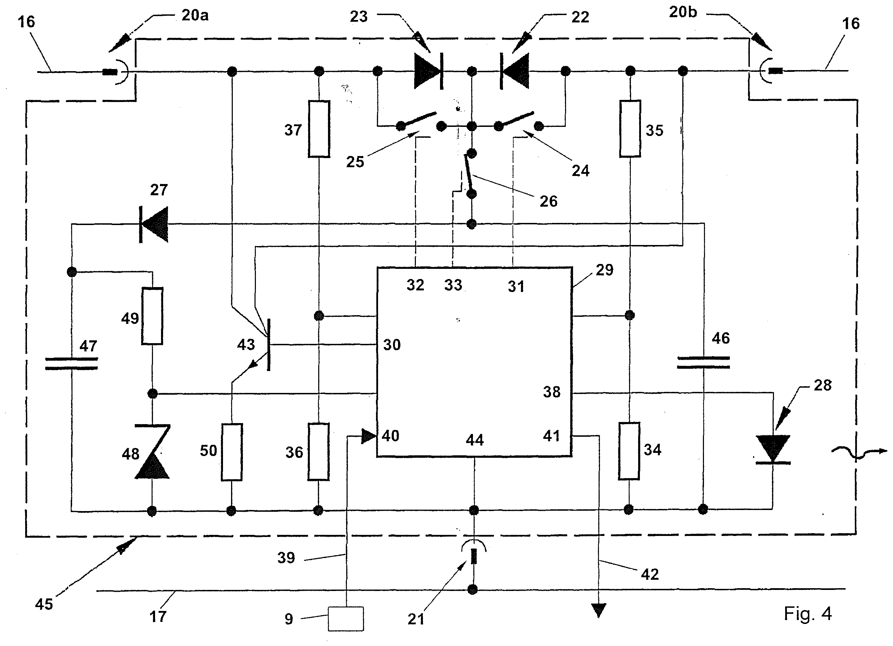

Die Erfindung wird nachfolgend anhand eines in der Zeichnung schematisch dargestellten Ausführungsbeispiels näher erläutert. In dieser zeigen Fig. 1 eine schematische Darstellung eines erfindungsgemäßen Messsystems, Fig. 2 eine Seitenansicht des Messsystems gemäß Fig. 1, Fig. 3 eine vereinfachte Darstellung einer bevorzugten Ausbildung einer adressierbaren Knoteneinheit des Sensorkabels und Fig. 4 eine detaillierte Darstellung der Knoteneinheit.

In Fig. 1 ist schematisch ein Schiffsrumpf 1 dargestellt, welcher eine Vielzahl von aufeinandergestapelten Containern 2 aufnimmt, wobei im vorliegenden Beispiel vier Stapel nebeneinander angeordnet sind. Im Schiffsrumpf 1 ist ein Gerüst angeordnet, welches wenigstens zwei vertikale Zellenführungen 6 umfasst. Im oberen Abschnitt ist an den Zellenführungen 6 an Laufweg 7 befestigt, welcher von der Mannschaft begangen werden kann, um Wartungs- und Inspektionsarbeiten durchzuführen. Die Zellenführungen 6 und der Laufweg 7 bilden gemeinsam ein Gerüst aus, an dem vertikal gespannte Seile 3 befestigt sind. Die Seile 3 sind jeweils mit ihrem oberen Ende an Abstandselementen 4 befestigt, die so an dem Gerüst befestigt sind, dass sie von diesem auskragen, wodurch sichergestellt ist, dass die Seile 3 in einem Abstand vom Gerüst sowie den Containern 2 verlaufen. Mit ihrem unteren Ende sind die Seile 3 an weiteren Befestigungselementen befestigt, die beispielsweise am Boden des Schiffsrumpfs 1 verankert sind. Die Seile sind hierbei so angeordnet, dass sie im Bereich zwischen nebeneinander liegenden Containern 2 verlaufen. Die Seile sind mit Dämpfungselementen 5 (Fig. 2) ausgestattet, die eine einer Spannungserhöhung der Seile 3 entgegengesetzte dämpfende Kraft ausüben.

An den Seilen 3 ist ein Sensorkabel 8 so befestigt, dass es mäanderförmig entlang der Container 2 verläuft. Die Befestigung erfolgt jeweils mit Hilfe eines Befestigungselements 11, wie z.B. einem Kabelbinder oder einer Klammer. Dabei sind mehrere horizontale lange Abschnitte des Sensorkabels 8 vorgesehen, die mit Temperatursensoren 9 bestückt und an den Containern 2 vorbeigeführt sind, und zwar bevorzugt auf mittlere Höhe der Container 2. Die Temperatursensoren 9 sind hierbei in regelmäßigem Abstand voneinander angeordnet, sodass sie im Wesentlichen vor der Mitte der ihnen zugewandten Containerwand hängen. Zwischen den horizontalen langen Abschnitten des Sensorkabels 8 ist das Sensorkabel 8 über einen kurzen vertikalen Abschnitt umgelenkt. Es ist aber auch eine andere Mäanderführung denkbar, bei der die langen Abschnitte des Sensorkabels 8 vertikal verlaufen.

In diesem Bespiel ist jedem Container 2 ein Temperatursensor 9 zugeordnet, wobei es auch möglich ist, dass jedem Container 2 mehrere Temperatursensoren 9 zugeordnet sind oder dass jeder Temperatursensor 9 mehr als einen Container 2 überwacht.

Neben den Temperatursensoren 9, die jeweils einem Container 2 zugeordnet sind, sind in Fig. 1 auch jene Sensoren 9' dargestellt, welche die Umgebungstemperatur des gesamten Containerstapels messen. Diese Temperatursensoren 9' können entweder die Umgebungstemperatur des Containerstapels messen, wie in Fig. 1 dargestellt, oder auch die Temperatur des Schiffsrumpfs 1.

Natürlich können sich auch Sensoren 9' an der Oberseite und Unterseite des Containerstapels befinden, deren Werte dann herangezogen werden, um festzustellen, ob sich eine Wärmequelle innerhalb des Laderaums befindet. Da sich der Laderaum während des Transports im Normalfall im thermischen Gleichgewicht befindet, müssen die Außensensoren 9' entweder die höchste oder die tiefste Temperatur messen. Ist dies nicht der Fall, kann auf eine Wärmequelle im Laderaum geschlossen werden und eine entsprechende Alarmmeldung ausgegeben werden.

Ein Ende des Sensorkabels 8 ist mit einem Kabelkopfrechner 10 verbunden. Das andere Ende des Sensorkabels 8 kann ebenfalls mit dem Kabelkopfrechner 10 verbunden sein oder auch mit einem zweiten, nicht dargestellten Kabelkopfrechner.

In Fig. 2 ist das erfindungsgemäße Messsystem in der Seitenansicht dargestellt. Das Seil 3 ist zwischen den Abstandselementen 4 angeordnet, sodass zwischen dem Halteelement 3 und dem Container 2 ein Abstand D verbleibt. Das Seil 3 ist jeweils unter Zwischenschaltung einer Feder 12, insbesondere eine Schraubenfeder an den Abstandselementen 4 befestigt. Weiters ist ein Dämpfungselement 5 dargestellt, um welches das Seil 3 geschlungen ist.

In Fig. 3 ist schematisch die Einbettung eines Temperatursensors 9 in eine adressierbare Knoteneinheit 13 des Sensorkabels 8 dargestellt. Das Sensorkabel 8 weist eine elektrisch isolierende Ummantelung 14 auf, die im Bereich der Knoteneinheit 13, d.h. zwischen den Verbindungsabschnitten 15 des Sensorkabels 8 unterbrochen ist. Im Inneren der Ummantelung 14 verlaufen zwei elektrische Leiter 16 und 17, die an eine einen Schaltkreis aufweisende Platine 18 der Knoteneinheit 5 angeschlossen sind. Ein Temperatursensor 9 ist an die Platine 18 bzw. den Schaltkreis angeschlossen. Die Knoteneinheit 13 ist von einem rohrförmigen Gehäuse 19 umgeben, welches in den Endbereichen 20 durch Crimpen auf die Ummantelung 14 des Sensorkabels 8 gepresst ist, um eine wasser- und staubdichte Verbindung zu erreichen. Das Gehäuse 19 besteht beispielsweise aus Metall, insbesondere Aluminium.

In einer bevorzugten, nicht dargestellten Ausbildung sind die beiden elektrischen Leiter 16 und 17 miteinander verdrillt und von einem Schirm umgeben. Dieser Schirm ist bevorzugt mit dem Gehäuse 19 an beiden Seiten der Knoteneinheit 13 elektrisch verbunden.

In Fig. 4 sind die schaltungstechnischen Merkmale der Knoteneinheit 13 im Detail dargestellt. Die Knoteneinheit 13 weist Anschlüsse 20a und 20b für den elektrischen Leiter 16 und einen Anschluss 21 für den elektrischen Leiter 17 auf. Die in Fig. 3 dargestellte Knoteneinheit 13 kann über die Leiter 16 und 17 entweder an eine weitere Knoteneinheit 13 oder an den Kabelkopfrechner 10 angeschlossen sein.

Die Anschlüsse 20a, 20b des hier einen Bus darstellenden elektrischen Leiters 16 führen beispielsweise ein positives Signal im Verhältnis zum Signal der negativen Leitung 21. Zwischen diesen Leitern wird also das jeweilige Signal abgefühlt. Dabei erfolgt die Adressierung der Knoteneinheit 13 über eine Umschalteinrichtung 22, 23, 24, 25 und 26, welche bei geöffneten Schaltern 24, 25 und geschlossenem Schalter 26 nur ein Signal vom Kabelkopfrechner 10 über die in dieser Richtung offene Diode 23 (die Diode 22 sperrt) und über den geschlossenen Schalter 26 zur Auswerteschaltung 29. Diese gibt über den Ausgang 30 ihrer Messung entsprechende Ausgangssignale ab, worauf - vorzugsweise auf Befehl des Kabelkopfrechners 10 - die Schalter 24, 25 geschlossen werden, der Schalter 26 aber geöffnet wird, so dass das nächste Abfragesignal des Kabelkopfrechners vom Anschluss 20a über die Schalter 25, 24 zum Anschluss 20b und von dort zur nächsten anzuwählenden Knoteneinheit mit im Prinzip etwa gleicher Umschalteinrichtung 22, 23, 24, 25 und 26 gelangt, so dass eine große Anzahl solcher modulartiger Knoteneinheiten 13 hintereinander geschaltet und auf einfache Art und Weise adressiert werden können. Die Schalter 24, 25, 26 werden in der Praxis elektronische Schalter, wie Transistoren, insbesondere FET-Transistoren bzw. MOSFETs sein.

Das Umschalten der Schalter 24, 25 und 26 könnte an sich zeitgesteuert ab Erhalt eines Adressierbefehls vom Controller durch einen Taktgeber der Auswerteschaltung 29 bzw. ein in der Auswerteschaltung 29 enthaltenes Programm erfolgen, doch ist es bevorzugt, wenn die Umschaltung über den Kabelkopfrechner 10 und ein von diesem abgegebenes Signal erfolgt. Tritt ein solches Umschaltsignal auf, dann werden die Schalter 24, 25 über Steuerausgänge 31, 32 und der Schalter 26 über einen Steuerausgang 33 entsprechend angesteuert. Zum Abfühlen, ob ein solches Umschaltsignal vom jeweiligen Kabelkopfrechner 10 vorliegt, sind Spannungsteiler 34, 35 bzw. 36, 37 vorgesehen, welche die zwischen den Leitungen 16 und 17 bestehende Spannung abfühlen. Diese Spannungsteiler liegen also ständig an den durch die Dioden 22, 23 voneinander getrennten Abschnitten der Leitungen 16, so dass sie Spannungsbefehlssignale auch dann erhalten, wenn die Schalter 24, 25 geschlossen und der Schalter 26 geöffnet wird, um die Adressierung der jeweils nächsten Knoteneinheit zu ermöglichen. Durch das Vorhandensein zweier Spannungsfühler 34, 35 und 36, 37 können also die Spannungen in den Abschnitten des Leiters 16 an beiden Seiten der Knoteneinheit 13 unabhängig voneinander abgefühlt werden, und je nach dem, aus welcher Richtung ein Adressiersignal kommt, wird auch das von der Auswerteschaltung 29 aufbereitete Sensorsignal gesandt, sofern tatsächlich zwei Richtungen vorgesehen werden, beispielsweise wenn zwei Kabelkopfrechner vorgesehen sind. Die Auswerteschaltung 29 vermag also durchaus zu erkennen, von welcher Seite ein Adressier- bzw. Steuersignal ansteht und wo nicht und kann dementsprechend die aufbereiteten Sensorsignale in die entsprechende Richtung senden.

Wird der Ausgang 38 benutzt, so treibt dieser die Leuchtdiode 28 so dass durch diese in der oben beschrieben Weisebeispielsweise als Aktor ein Vorgang ausgelöst werden kann. Möglich wäre aber auch, hier einen Treiberausgang für ein Display vorzusehen, um die Messung nach außen sichtbar zu machen. Der Temperatursensor 9 ist über die Eingangsleitung 39 an den Eingang 40 der Auswerteschaltung 29 angeschlossen. Das Messsignal des Temperatursensors 9 tritt somit über die Eingangsleitung 39 an den Eingang 40 der Auswerteschaltung 29. Natürlich kann auch ein weiterer Signalausgang 41 mit einer Ausgangsleitung 42 verbunden sein, an welche andere, weitere lokale Einheiten angeschlossen sind, die Information aus der Knoteneinheit empfangen. Die Leuchtdiode 28, die vom Ausgang 38 angesteuert wird, kann beispielsweise im Infrarot-Bereich emittieren. Selbstverständlich sind auch andere Lichtquellen oder Aktorenschaltungen, beispielsweise mit Relais, denkbar, doch ist die Verwendung einer Diode baulich günstiger.

Über den Modulatorausgang 30 hingegen wird vorteilhaft ein dem Messwert entsprechend moduliertes Signal über einen Modulatortransistor 43 über seine zwei Kollektoren an den Bus (Anschlüsse 20a und 20b) und an den Kabelkopfrechner 10 abgegeben, der dieses Signal auf die herkömmliche Art auswertet, beispielsweise um festzustellen, ob im Bereich des Temperatursensors 12 ein unzulässiger Temperaturzustand aufgetreten ist.

Entsprechend den Anschlüssen 20a, 20b ist auch die Leitung 17 vorteilhaft über eine (zerstörungsfrei) lösbare bzw. trennbare Verbindung bzw. eine Steckverbindung 21 mit der Knoteneinheit 13 verbunden.

Bei manchen Ausführungen mag es vorteilhaft sein, wenn nur die Leitungen 20a, 20b über lösbare Verbindungen, z.B. Steckverbindungen, angeschlossen werden, wogegen der Ausgang 44 unmittelbar mit der negativen Leitung 17 verbunden, beispielsweise verlötet, ist, weil dadurch etwaige Zugspannungen in Längsrichtung sich nicht auf die Positionierung der Knoteneinheit 13 auswirken. Doch lässt sich auch eine positionierungsfeste und Zugspannungen aufnehmende lösbare Verbindung verwirklichen.

Wenn nun die normalerweise offenen Schalter 24, 25 geschlossen und der, normalerweise geschlossene, Schalter 26 geöffnet ist, dann ist die Messschaltung 9, 29 praktisch auch von der Spannung abgekoppelt, die sie für ihr weiteres Funktionieren braucht. Um dieses Problem zu lösen, ist in der Schaltung 45 mindestens eine Stromquelle bzw. ein Stromspeicher, hier in Form zweier Kondensatoren 46 und 47 vorgesehen. Alternativ könnten auch Akkumulatoren verwendet werden. Dabei ist es vorteilhaft, wenn die Umschaltung der Schalter 24, 25 und 26 nicht genau gleichzeitig erfolgt, sondern zunächst entweder die beiden Schalter 24, 25 aus dem geöffneten in den geschlossenen Zustand bei weiterhin geschlossenem Schalter 26 gebracht werden oder wenigstens erst der Schalter 24 geschlossen wird. Dadurch wird Ladung aus dem Kondensator 46 an den Leiter 16 und an die nächste Knoteneinheit abgegeben, und die Adressierung desselben kann sehr schnell erfolgen. Der Kondensator 47 bleibt von diesem "verspäteten" Öffnen des Schalters 26 deshalb unberührt, weil zwischen ihm und dem Schalter 26 eine Sperrdiode 27 liegt. Die Größe des zeitlichen Unterschieds zwischen dem Schließen der Schalter 24, 25 und dem Öffnen des Schalters 26 hängt davon ab, wie groß der Kondensator 46 ist, d.h. welche Ladung in welcher Zeit übertragen werden kann, und von dem Bedarf an Ladung der als nächstes anzuwählenden Knoteneinheit. Der Kondensator 47 in Zusammenarbeit mit der Diode 27 kann daher als "Ladungspumpe" bezeichnet werden.

Somit kann nach dem Öffnen des Schalters 26 der Reststrom aus dem Kondensator 46 mit der Ladung des maximal aufgeladenen Kondensators 47 kombiniert werden. Beide Kondensatoren 46 und 47 sind nach dem Öffnen des Schalters 26 vom rechten und linken Abschnitt des Leiters 16 praktisch isoliert und beeinträchtigen daher die Datenübertragungsrate zwischen dem Kabelkopfrechner 10 und den jeweiligen Knoteneinheiten 13 nicht.

Um die Stromquellen 46, 47 nicht zu groß machen zu müssen, ist es zweckmäßig, wenn die Schaltung auf einen "sleep"-Modus, d.h. auf eine Betriebsart mit geringerem Stromverbrauch, geschaltet werden kann. Dies kann über ein in der Auswerteschaltung 29 vorhandenes Programm oder über einen darin befindlichen Taktgeber (z.B. mit Zähler, der eine gewisse Anzahl von Takten nach dem Öffnen des Schalters 26 auf diesen "sleep"-Modus umschaltet) geschehen, wird aber bevorzugt über ein "sleep"-Signal des Controllers ausgelöst. Dieses Signal kann und wird ja auch nach dem Öffnen des Schalters 26 über die Spannungsteiler 34, 35 bzw. 36, 37 empfangen werden. In diesem "sleep"-Modus wird die Auswerteschaltung 29 über eine Zenerdiode 48 mit Widerstand 49 zwischen den beiden Seiten des Kondensators 47 mit einer relativ tieferen Spannung versorgt, wobei sich der Kondensator 47 so weit entlädt, bis er die Restspannung des Kondensators 46 erreicht hat, worauf ihm von diesem diese Restspannung als weitere Versorgungsreserve über die Sperrdiode 27 zugeführt wird. Somit steht der Auswerteschaltung bis zum nächsten Adressierzyklus genügend Energie zur Verfügung. Es sei bemerkt, dass die kapazitiven Ladungen der Kondensatoren 46 und 47 bei geöffnetem Schalter 26 von dem rechten und linken Abschnitt des Leiters 16 völlig isoliert sind und daher die Signalübermittlung nicht zu beeinflussen vermögen.

Diese Auswerteschaltung kann also auch dann Daten des Sensorelementes sammeln, wenn sie nicht adressiert ist. Um diese Daten auszuwerten, besitzt die Auswerteschaltung 29 vorzugsweise einen Zwischenspeicher, in dem die Sensordaten gespeichert werden so dass die Modulatorschaltung 50,43 erst wieder in Betrieb geht, wenn die Knoteneinheit 13 vom Kabelkopfrechner 10 wieder angewählt wird. Dabei kann durchaus auch eine Vorbearbeitung der Daten stattfinden, etwa eine Mittelwertbildung über einen bestimmten Zeitraum (z.B. dem Zeitraum bis zur neuerlichen Adressierung), oder eine Maximal-/Minimalwert-Feststellung, so dass die Verarbeitung beim Controller rascher vor sich gehen kann.

Natürlich kann die Erfindung auch mit einem Sensorelement ganz anderer Art betrieben werden, wie dies dem Fachmann wohlbekannt ist. So kann jedes linienförmige Sensorelement verwendet werden, um die erforderlichen Werte des Temperaturfeldes im Containerstapel und an seinen Rändern zu erzeugen. Insbesondere kann dies mit handelsüblichen Sensorkabeln oder mit Fiberoptik Sensorik erfolgen.

Auch können natürlich die Halteelemente und Abstandselemente schon Bestandteil des Containerschiffs sein, was bei Neubauten besonders vorteilhaft ist.

## Patentansprüche

1. Messsystem zur Überwachung einer Mehrzahl von Containern, insbesondere Schiffscontainern, umfassend ein Gerüst, zumindest einen Kabelkopfrechner, zumindest ein gespanntes Halteelement sowie eine Mehrzahl von in einem Sensorkabel angeordneten Temperatursensoren, wobei jedem Container zumindest ein Temperatursensor des Sensorkabels zuordenbar ist, das Sensorkabel mit dem zumindest einen Kabelkopfrechner verbunden ist und der zumindest eine Kabelkopfrechner ausgebildet ist, um Messergebnisse von den Temperatursensoren zu erhalten und die Messergebnisse auszuwerten, wobei das Sensorkabel (8) an dem zumindest einen gespannten Halteelement (3), insbesondere einem Seil, befestigt ist, wobei das zumindest eine Halteelement (3) an zumindest einer Stelle an dem Gerüst befestigt ist.

2. Messsystem nach Anspruch 1, **dadurch gekennzeichnet, dass** das zumindest eine Halteelement (3) zumindest an einer Stelle mithilfe eines Federelements (12) gelagert ist.

3. Messsystem nach Anspruch 1 oder 2, **dadurch gekennzeichnet, dass** das zumindest eine Halteelement (3) an zumindest einer Stelle an einem Abstandselement (4) befestigt ist.

4. Messsystem nach Anspruch 1, 2 oder 3, **dadurch gekennzeichnet, dass** zumindest ein Halteelement (3) ein Dämpfungselement (5) aufweist.

5. Messsystem nach einem der Ansprüche 1 bis 4, **dadurch gekennzeichnet, dass** zumindest eines, bevorzugt alle, der Halteelemente (3) ein Stahlseil ist/sind.

6. Messsystem nach einem der Ansprüche 1 bis 5, **dadurch gekennzeichnet, dass** das Sensorkabel (8) lösbar an den Halteelementen (3) angebracht ist.

7. Messsystem nach einem der Ansprüche 1 bis 6, **dadurch gekennzeichnet, dass** die Temperatursensoren (9) von der Außenwand der einzelnen Container (2) im im Wesentlichen gleichen Abstand anordenbar sind, bevorzugt in einer Distanz von 5 bis 50cm, besonders bevorzugt in einer Distanz von 10 bis 20cm.

8. Messsystem nach einem der Ansprüche 1 bis 7, **dadurch gekennzeichnet, dass** die Halteelemente (3) lösbar an dem Gerüst, insbesondere an einem Laufweg (7), befestigt sind.

9. Messsystem nach einem der Ansprüche 1 bis 8, **dadurch gekennzeichnet, dass** die Halteelemente (3) im Wesentlichen jeweils vertikal angeordnet sind.

10. Messsystem nach einem der Ansprüche 1 bis 9, **dadurch gekennzeichnet, dass** das Sensorkabel (8) im Wesentlichen horizontal mäanderförmig an den Halteelementen (3) angeordnet ist.

11. Messsystem nach einem der Ansprüche 1 bis 10, **dadurch gekennzeichnet, dass** weitere Sensoren (9') vorgesehen sind, welche die Temperatur an den oberen, unteren und seitlichen Rändern des Containerstapels messen.

12. Containerschiff, umfassend ein Messsystem nach einem der Ansprüche 1 bis 11.

13. Containerschiff nach Anspruch 12, **dadurch gekennzeichnet, dass** die Halteelemente (3) und das Sensorkabel (8) in einem Container-Laderaum und der mit dem Sensorkabel (8) verbundene Kabelkopfrechner (10) außerhalb des Container-Laderaums angeordnet sind.

14. Verfahren zur Überwachung einer Mehrzahl von Containern, insbesondere Schiffscontainern, wobei jedem Container zumindest ein in einem Sensorkabel angeordneter Temperatursensor zugeordnet wird, das Sensorkabel mit zumindest einem Kabelkopfrechner verbunden wird, und der zumindest eine Temperatursensor Messergebnisse an den zumindest einen Kabelkopfrechner sendet und anschließend der zumindest eine Kabelkopfrechner die Messergebnisse der Temperatursensoren auswertet, wobei das Sensorkabel (8) an einem gespannten Halteelement (3), insbesondere einem Seil, befestigt wird.

15. Verfahren nach Anspruch 14, **dadurch gekennzeichnet, dass** die Temperatursensoren (9) im Wesentlichen die von den ihnen zugeordneten Containern (2) abgegebene Infrarot-Strahlung messen.

16. Verfahren nach Anspruch 14 oder 15, **dadurch gekennzeichnet, dass** die Temperatursensoren (9) zwischen zwei Halteelementen (3) angeordnet werden und mit der Schiffsstruktur thermisch nicht in Kontakt treten.

17. Verfahren nach einem der Ansprüche 14 bis 16, **dadurch gekennzeichnet, dass** die Messwerte jeweils eines Temperatursensors (9) mit den Messwerten der angrenzenden Temperatursensoren (9) verglichen werden, wobei bei Abweichungen der Messwerte des Temperatursensors (9) von den Messwerten der angrenzenden Temperatursensoren (9) ein Alarmsignal ausgelöst wird.

18. Verfahren nach einem der Ansprüche 14 bis 17, **dadurch gekennzeichnet, dass** Temperaturdifferenzen zwischen benachbarten Containern erfasst werden und dass Temperaturdifferenzen, die zwischen randseitig angeordneten, d.h. der Umgebung zugewandten Containern und benachbarten, weiter innen angeordneten Containern festgestellt werden und sich nach innen fortpflanzen, als Normalfall erkannt werden, und Temperaturdifferenzen, die sich von innen nach außen fortpflanzen als Alarmfall erkannt werden.

19. Verfahren nach einem der Ansprüche 14 bis 18, **dadurch gekennzeichnet, dass** an oberen, unteren und seitlichen Rändern des Laderaums angeordnete Temperatursensoren (9') mit den Temperatursensoren (9) der Container (2) in Bezug gesetzt werden, und dass derart festgestellt wird, ob sich eine Wärmequelle innerhalb des Laderaums befindet.

20. Verfahren nach einem der Ansprüche 14 bis 19, **dadurch gekennzeichnet, dass** die Messwerte jeweils eines Temperatursensors (9) mit einem Mittelwert aller Temperatursensoren (9) verglichen werden, wobei bei Abweichungen der Messwerte des Temperatursensors (9) von dem Mittelwert ein Alarmsignal ausgelöst wird.

21. Verfahren nach einem der Ansprüche 14 bis 19, **dadurch gekennzeichnet, dass** die Messwerte jeweils eines Temperatursensors (9) mit einem festen Schwellenwert verglichen werden, wobei bei Überschreitung des Schwellenwertes ein Alarmsignal ausgelöst wird.

22. Verfahren nach einem der Ansprüche 14 bis 21, **dadurch gekennzeichnet, dass** das Alarmsignal die räumliche Position des Temperatursensors (9) bzw. des diesem Temperatursensor (9) zugeordneten Containers (2) angibt.

## Claims

1. A measuring system for monitoring a plurality of containers, in particular ship containers, comprising a frame, at least one cable head computer, at least one tensioned retaining element, as well as a plurality of temperature sensors arranged in a sensor cable, wherein at least one temperature sensor of the sensor cable is assignable to each of the containers, the sensor cable is connected to the at least one cable head computer, and the at least one cable head computer is designed to receive measurements from the temperature sensors and to evaluate said measurements, wherein the sensor cable (8) is fastened to the at least one tensioned retaining element (3), in particular a rope, wherein the at least one retaining element (3) is fastened to the frame in at least one point.

2. A measuring system according to claim 1, **characterized in that** the at least one retaining element (3) is mounted via a spring element (12) in at least one point.

3. A measuring system according to claim 1 or 2, **characterized in that** the at least one retaining element (3) is fastened to a spacer element (4) in at least one point.

4. A measuring system according to claim 1, 2 or 3, **characterized in that** at least one retaining element (3) comprises a damping element (5).

5. A measuring system according to any one of claims 1 to 4, **characterized in that** at least one, preferably all, of the retaining elements (3) are steel ropes.

6. A measuring system according to any one of claims 1 to 5, **characterized in that** the sensor cable (8) is detachably attached to the retaining elements (3).

7. A measuring system according to any one of claims 1 to 6, **characterized in that** the temperature sensors (9) are each arrangeable at a substantially equal distance from the outer wall of the individual container (2), preferably at a distance from 5 to 50cm, particularly preferred at a distance from 10 to 20cm.

8. A measuring system according to any one of claims 1 to 7, **characterized in that** the retaining elements (3) are detachably fastened to the frame, in particular to a moving track (7).

9. A measuring system according to any one of claims 1 to 8, **characterized in that** the retaining elements (3) are each arranged substantially vertically.

10. A measuring system according to any one of claims 1 to 9, **characterized in that** the sensor cable (8) is arranged on the retaining elements (3) in a substantially horizontally meandering manner.

11. A measuring system according to any one of claims 1 to 10, **characterized in that** further sensors (9') are provided to measure the temperature on the upper, lower and lateral edges of the container stack.

12. A container ship comprising a measuring system according to any one of claims 1 to 11.

13. A container ship according to claim 12, **characterized in that** the retaining elements (3) and the sensor cable (8) are arranged in a container cargo hold, and the cable head computer (10) connected to the sensor cable (8) is arranged outside the container cargo hold.

14. A method for monitoring a plurality of containers, in particular ship containers, wherein at least one temperature sensor arranged in a sensor cable is assigned to each container, the sensor cable is connected to the at least one cable head computer, and the at least one temperature sensor sends measurements to the at least one cable head computer and the at least one cable head computer subsequently evaluates the measurements of the temperature sensors, wherein the sensor cable (8) is fastened to a tensioned retaining element (3), in particular a rope.

15. A method according to claim 14, **characterized in that** the temperature sensors (9) substantially measure the infrared radiation emitted by the respectively assigned containers (2).

16. A method according to claim 14 or 15, **characterized in that** the temperature sensors (9) are arranged between two retaining elements (3) without entering into thermal contact with the ship structure.

17. A method according to any one of claims 14 to 16, **characterized in that** the measurements of one temperature sensor (9) each are compared to the measurements of the adjacent temperature sensors (9), wherein an alarm signal is triggered at deviations of the measurements of the temperature sensor (9) from the measurements of the adjacent temperature sensors (9).

18. A method according to any one of claims 14 to 17, **characterized in that** temperature differences between adjacent containers are detected, and that temperature differences that are determined between containers arranged on edge sides, i.e. containers facing the environment, and adjacent, farther inwardly arranged containers, and which propagate inwards are recognized as normal cases, and temperature differences that propagate from the interior outwards are recognized as cases of alarm.

19. A method according to any one of claims 14 to 18, **characterized in that** temperature sensors (9') arranged on upper, lower and lateral edges of the cargo hold are correlated with the temperature sensors (9) of the container (2), and that it is thus determined whether a heat source is within the cargo hold.

20. A method according to any one of claims 14 to 19, **characterized in that** the measurements of one temperature sensor (9) each are compared to an average value of all temperature sensors (9), wherein an alarm signal is triggered at deviations of the measurements of the temperature sensors (9) from the average value.

21. A method according to any one of claims 14 to 19, **characterized in that** the measurements of one temperature sensor (9) each are compared to a fixed threshold, wherein an alarm signal is triggered when said threshold is exceeded.

22. A method according to any one of claims 14 to 21, **characterized in that** the alarm signal indicates the spatial position of a temperature sensor (9) or the container (2) assigned to the temperature sensor (9), respectively.

## Revendications

1. Système de mesure pour la surveillance d'une pluralité de conteneurs, en particulier de conteneurs de bateau, comprenant un bâti, au moins un calculateur de tête de câble, au moins un élément de retenue serré ainsi qu'une pluralité de capteurs de température agencés dans un câble de capteur, dans lequel à chaque conteneur peut être associé au moins un capteur de température du câble de capteur, le câble de capteur est raccordé à l'au moins un calculateur de tête de câble et l'au moins un calculateur de tête de câble est formé afin d'obtenir des résultats de mesure des capteurs de température et d'évaluer les résultats de mesure, dans lequel le câble de capteur (8) est fixé sur l'au moins un élément de retenue (3) serré, en particulier un cordon, dans lequel l'au moins un élément de retenue (3) est fixé sur au moins un emplacement sur le bâti.

2. Système de mesure selon la revendication 1, **caractérisé en ce que** l'au moins un élément de retenue (3) est logé au moins sur un emplacement à l'aide d'un élément de ressort (12).

3. Système de mesure selon la revendication 1 ou 2, **caractérisé en ce que** l'au moins un élément de retenue (3) est fixé sur au moins un emplacement sur un élément d'écartement (4).

4. Système de mesure selon la revendication 1, 2 ou 3, **caractérisé en ce qu'**au moins un élément de retenue (3) présente un élément d'amortissement (5).

5. Système de mesure selon l'une quelconque des revendications 1 à 4, **caractérisé en ce qu'**au moins un, de préférence tous les éléments de retenue (3) est ou sont un cordon d'acier.

6. Système de mesure selon l'une quelconque des revendications 1 à 5, **caractérisé en ce que** le câble de capteur (8) est monté de manière amovible sur les éléments de retenue (3).

7. Système de mesure selon l'une quelconque des revendications 1 à 6, **caractérisé en ce que** les capteurs de température (9) peuvent être agencés à une distance sensiblement identique de la paroi extérieure des conteneurs individuels (2), de préférence à une distance de 5 à 50 cm, de manière particulièrement préférée à une distance de 10 à 20 cm.

8. Système de mesure selon l'une quelconque des revendications 1 à 7, **caractérisé en ce que** les éléments de retenue (3) sont fixés de manière amovible au bâti, en particulier sur un parcours (7).

9. Système de mesure selon l'une quelconque des revendications 1 à 8, **caractérisé en ce que** les éléments de retenue (3) sont agencés sensiblement respectivement verticalement.

10. Système de mesure selon l'une quelconque des revendications 1 à 9, **caractérisé en ce que** le câble de capteur (8) est agencé sensiblement horizontalement en forme de méandres sur les éléments de retenue (3).

11. Système de mesure selon l'une quelconque des revendications 1 à 10, **caractérisé en ce que** d'autres capteurs (9') sont prévus, lesquels mesurent la température sur les bords supérieurs, inférieurs et latéraux de la pile de conteneurs.

12. Bateau à conteneurs comprenant un système de mesure selon l'une quelconque des revendications 1 à 11.

13. Bateau à conteneurs selon la revendication 12, **caractérisé en ce que** les éléments de retenue (3) et le câble de capteur (8) sont agencés dans un espace de chargement de conteneurs et le calculateur de tête de câble (10) raccordé au câble de capteur (8) est agencé en dehors de l'espace de chargement de conteneurs.

14. Procédé de surveillance d'une pluralité de conteneurs, en particulier de conteneurs de bateau, dans lequel au moins un capteur de température agencé dans un câble de capteur est associé à chaque conteneur, le câble de capteur est raccordé à au moins un calculateur de tête de câble, et l'au moins un capteur de température envoie des résultats de mesure à l'au moins un calculateur de tête de câble et ensuite l'au moins un calculateur de tête de câble évalue les résultats de mesure des capteurs de température, dans lequel
le câble de capteur (8) est fixé à un élément de retenue (3) serré, en particulier un cordon.

15. Procédé selon la revendication 14, **caractérisé en ce que** les capteurs de température (9) mesurent sensiblement le rayonnement infrarouge émis par les conteneurs (2) qui leur sont associés.

16. Procédé selon la revendication 14 ou 15, **caractérisé en ce que** les capteurs de température (9) sont agencés entre deux éléments de retenue (3) et n'entrent pas en contact thermique avec la structure de bateau.

17. Procédé selon l'une quelconque des revendications 14 à 16, **caractérisé en ce que** les valeurs de mesure respectivement d'un capteur de température (9) sont comparées aux valeurs de mesure des capteurs de température (9) contigus, dans lequel, en cas de divergences des valeurs de mesure du capteur de température (9) vis-à-vis des valeurs de mesure des capteurs de température (9) contigus, un signal d'alarme est déclenché.

18. Procédé selon l'une quelconque des revendications 14 à 17, **caractérisé en ce que** des différences de température sont détectées entre des conteneurs contigus et des différences de température qui sont constatées entre des conteneurs agencés côté bord, c'est-à-dire tournés vers l'environnement et des conteneurs contigus agencés plus vers l'intérieur et se propagent vers l'intérieur, sont reconnues comme étant le cas normal, et des différences de température qui se propagent de l'intérieur vers l'extérieur sont reconnues comme étant cas d'alarme.

19. Procédé selon l'une quelconque des revendications 14 à 18, **caractérisé en ce que** des capteurs de température (9') agencés sur des bords supérieurs, inférieurs et latéraux de l'espace de chargement sont placés en rapport avec les capteurs de température (9) des conteneurs (2) et il est établi de la sorte si une source de chaleur se trouve dans l'espace de chargement.

20. Procédé selon l'une quelconque des revendications 14 à 19, **caractérisé en ce que** les valeurs de mesure respectivement d'un capteur de température (9) sont comparées à une valeur moyenne de tous les capteurs de température (9), dans lequel, en cas de divergences des valeurs de mesure du capteur de température (9) vis-à-vis de la valeur moyenne, un signal d'alarme est déclenché.

21. Procédé selon l'une quelconque des revendications 14 à 19, **caractérisé en ce que** les valeurs de mesure respectivement d'un capteur de température (9) sont comparées à une valeur de seuil fixe, dans lequel, en cas de dépassement de la valeur de seuil, un signal d'alarme est déclenché.

22. Procédé selon l'une quelconque des revendications 14 à 21, **caractérisé en ce que** le signal d'alarme indique la position spatiale du capteur de température (9) ou du contenant (2) associé à ce capteur de température (9).
